# EUROPEAN PATENT APPLICATION

(11) **EP 4 068 416 A1**
(43) Date of publication of application: **05.10.2022**
(21) Application number: 20892761.6
(22) Date of filing: 12.11.2020
(51) Int. Cl.: H01M 4/13, H01M 10/052, H01M 10/0566, H01M 10/058, H01M 50/10, H01M 50/147

(54) **NON-AQUEOUS ELECTROLYTE SECONDARY CELL AND METHOD FOR MANUFACTURING NON-AQUEOUS ELECTROLYTE SECONDARY CELL**

(30) Priority: 29.11.2019 JP 2019216920
(71) Applicant: SANYO Electric Co., Ltd., Daito-shi Osaka 574-8534 (JP)
(72) Inventor: NISHIDA, Akira, Chuo-ku, Osaka-shi, Osaka 540-6207 (JP)
(74) Representative: Novagraaf International SA
(86) International application number: PCT/JP2020/042220
(87) International publication number: WO 2021/106593

(57) **Abstract**

A non-aqueous electrolyte secondary cell according to the present invention comprises: an electrode body constituted by a plurality of positive electrodes and a plurality of negative electrodes alternately layered one by one with separators interposed therebetween; a non-aqueous electrolyte solution; and a case that houses the electrode body and the non-aqueous electrolyte solution. A solution injection port for injecting the electrolyte solution is provided in the case. The density of a first region separated from the solution injection port is less than the density of a second region, which is near the solution injection port, in positive electrode compound layers of the positive electrodes and/or negative electrode compound layers of the negative electrodes constituting the electrode body.

## Description

### TECHNICAL FIELD

The present disclosure relates to a non-aqueous electrolyte secondary battery and a method of manufacturing a non-aqueous electrolyte secondary battery.

### BACKGROUND ART

Conventionally commonly known is a non-aqueous electrolyte secondary battery comprising: an electrode assembly including a positive electrode, a negative electrode, and a separator; a non-aqueous electrolyte liquid; and an exterior housing body housing them. Patent Literature 1, for example, discloses a cylindrical non-aqueous electrolyte secondary battery comprising a wound electrode assembly in which a positive electrode and a negative electrode are spirally wound with a separator interposed therebetween. In the non-aqueous electrolyte secondary battery of Patent Literature 1, a groove is formed on at least one mixture layer of the positive electrode and negative electrode for improving permeation properties of a non-aqueous electrolyte liquid in the electrode assembly to improve cycle characteristics during charge and discharge of the battery.

Patent Literature 2 discloses a cylindrical non-aqueous electrolyte secondary battery in which a low-density part having a lower density than the other region is formed along the axial direction of a wound electrode assembly on at least one mixture layer of a positive electrode and negative electrode. Patent Literature 2 describes that providing the low-density part on a part of the mixture layer improves permeation properties of a non-aqueous electrolyte liquid.

### CITATION LIST

### PATENT LITERATURE

PATENT LITERATURE 1: Japanese Unexamined Patent Application Publication No. 2001-176558
PATENT LITERATURE 2: Japanese Unexamined Patent Application Publication No. 2018-137187

### SUMMARY

A non-aqueous electrolyte liquid is typically injected inside an exterior housing body through a liquid injecting part provided on the exterior housing body after an electrode assembly is housed inside the exterior housing body. In this time, permeation of the non-aqueous electrolyte liquid in an entirety of the electrode assembly is an important challenge. The art disclosed in Patent Literatures 1 and 2 has still a room for improvement in this point. In the non-aqueous electrolyte secondary battery of Patent Literature 1, an active material amount in the mixture layer is decreased by forming the groove on the mixture layer, leading to difficulty in increasing battery capacity.

A non-aqueous electrolyte secondary battery according to the present disclosure is a non-aqueous electrolyte secondary battery, comprising: an electrode assembly in which a plurality of positive electrodes and a plurality of negative electrodes are alternately stacked one by one with a separator interposed therebetween; a non-aqueous electrolyte liquid; and an exterior housing body housing the electrode assembly and the non-aqueous electrolyte liquid, wherein a liquid injecting part for injecting the non-aqueous electrolyte liquid is provided on the exterior housing body, each of the plurality of the positive electrodes includes a positive electrode core and a positive electrode mixture layer formed on a surface of the positive electrode core, each of the plurality of the negative electrodes includes a negative electrode core and a negative electrode mixture layer formed on a surface of the negative electrode core, and in at least one of the positive electrode mixture layer and the negative electrode mixture layer, a density of a first region distanced from the liquid injecting part is lower than a density of a second region proximate to the liquid injecting part.

A method of manufacturing a non-aqueous electrolyte secondary battery according to the present disclosure is a method of manufacturing a non-aqueous electrolyte secondary battery comprising: an electrode assembly in which a plurality of positive electrodes and a plurality of negative electrodes are alternately stacked one by one with a separator interposed therebetween; a non-aqueous electrolyte liquid; and an exterior housing body, the method including: a step of producing the positive electrode by forming a positive electrode mixture layer on a surface of a positive electrode core; a step of producing the negative electrode by forming a negative electrode mixture layer on a surface of a negative electrode core; a step of producing the electrode assembly by using a plurality of the positive electrodes and a plurality of the negative electrodes; and a step of injecting the non-aqueous electrolyte liquid after the electrode assembly is housed inside the exterior housing body, wherein in at least one of the steps of forming the positive electrode mixture layer and the negative electrode mixture layer, the mixture layer is formed so that a density of a region positioned on a first end part side of the mixture layer is lower than a density of a region positioned on a second end part side opposite to the first end part, and in the step of injecting the non-aqueous electrolyte liquid, the non-aqueous electrolyte liquid is injected inside the exterior housing body through the second end part side.

In the non-aqueous electrolyte secondary battery according to the present disclosure, the non-aqueous electrolyte liquid may permeate an entirety of the electrode assembly when the non-aqueous electrolyte liquid is injected inside the exterior housing body, and may uniformly spread in the entirety of the electrode assembly. For example, a largely uneven amount of the electrolyte liquid in the electrode assembly causes an ununiform battery reaction, leading to performance deterioration. The non-aqueous electrolyte secondary battery according to the present disclosure may inhibit an occurrence of such a shortcoming.

### BRIEF DESCRIPTION OF DRAWINGS

FIG. 1 is a perspective view illustrating an appearance of a non-aqueous electrolyte secondary battery of an example of an embodiment.
FIG. 2 is a perspective view of an electrode assembly and sealing plate of an example of an embodiment.
FIG. 3 is an exploded perspective view of an electrode assembly of an example of an embodiment.
FIG. 4 is a sectional view illustrating a part of an electrode assembly and a front view of a positive electrode of an example of an embodiment.
FIG. 5 is a view describing a manufacturing step of a positive electrode of an example of an embodiment.

### DESCRIPTION OF EMBODIMENTS

Hereinafter, an example of an embodiment of the present disclosure will be described in detail with reference to the drawings. It is anticipated in advance to selectively combine a plurality of embodiments and modified examples exemplified below. The description "a numerical value A to a numerical value B" herein means "the numerical value A or more and the numerical value B or less", unless otherwise specified.

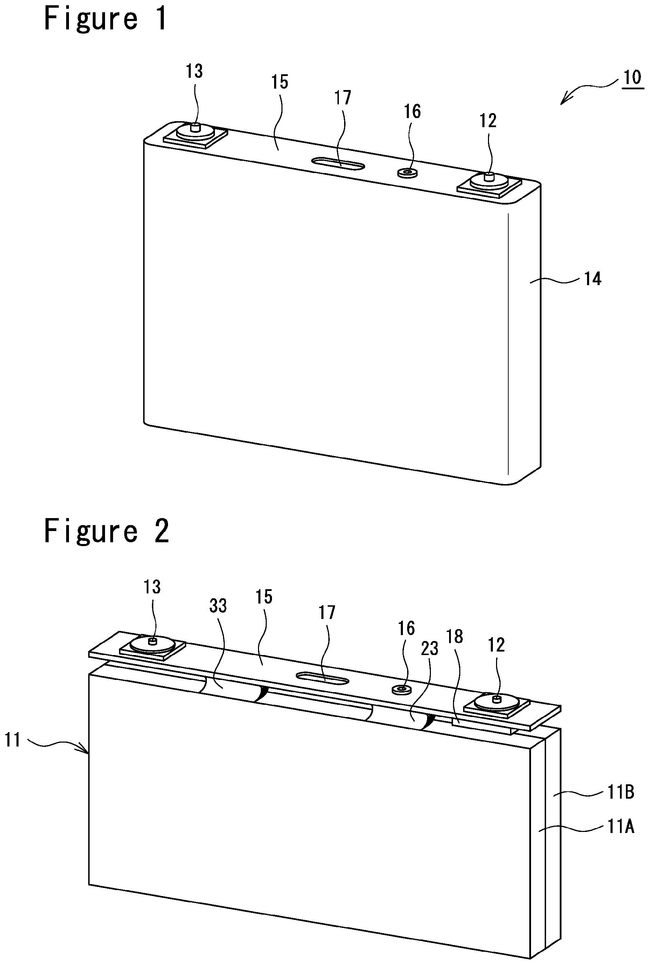

FIG. 1 is a perspective view illustrating an appearance of a non-aqueous electrolyte secondary battery 10 of an example of an embodiment. FIG. 2 is a perspective view of an electrode assembly 11 and sealing plate 15 constituting the non-aqueous electrolyte secondary battery 10 (a view illustrating a state with removing an exterior housing can 14). The non-aqueous electrolyte secondary battery 10 exemplified in FIG. 1 comprises a rectangular container including the exterior housing can 14 and the sealing plate 15 as an exterior housing body, but the exterior housing body is not limited thereto and may be, for example, an exterior housing body composed of a laminate sheet including a metal layer and a resin layer.

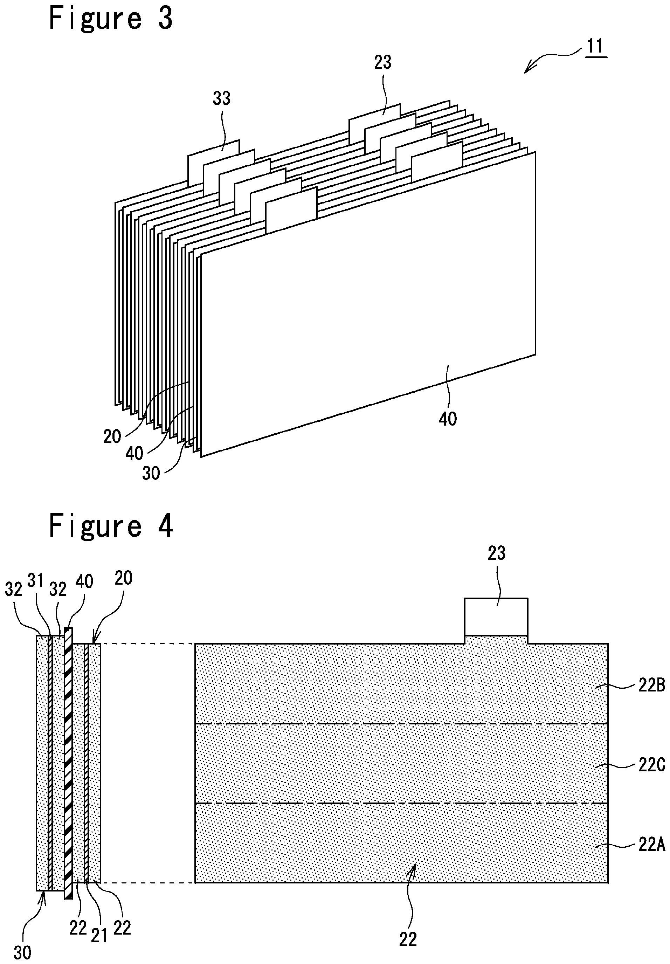

As exemplified in FIG. 1 and FIG. 2, the non-aqueous electrolyte secondary battery 10 comprises: the electrode assembly 11; a non-aqueous electrolyte liquid; the bottomed rectangular-cylindrical exterior housing can 14 housing the electrode assembly 11 and the non-aqueous electrolyte liquid; and the sealing plate 15 sealing an opening of the exterior housing can 14. The non-aqueous electrolyte secondary battery 10 is a so-called rectangular battery. The electrode assembly 11 is a stacked electrode assembly in which a plurality of positive electrodes 20 and a plurality of negative electrodes 30 are alternately stacked one by one with a separator 40 interposed therebetween (see FIG. 3 below for detail). The exterior housing can 14 is a metal container having a flat, substantially rectangular-parallelepiped shape with one open end in the axial direction. The sealing plate 15 has an elongate rectangular shape. The exterior housing can 14 and the sealing plate 15 are constituted with, for example, a metal material mainly composed of aluminum.

Hereinafter, for convenience of description, the height direction of the exterior housing can 14 will be described as "the upper-lower direction" of the non-aqueous electrolyte secondary battery 10, the sealing plate 15 side will be described as "the upper side", and the bottom side of the exterior housing can 14 will be described as "the lower side". The direction along the longitudinal direction of the sealing plate 15 will be described as "the lateral direction" of the non-aqueous electrolyte secondary battery 10.

The non-aqueous electrolyte liquid includes, for example, a non-aqueous solvent and an electrolyte salt dissolved in the non-aqueous solvent. For the non-aqueous solvent, esters, ethers, nitriles, amides, a mixed solvent of two or more thereof, and the like may be used, for example. The non-aqueous solvent may contain a halogen-substituted solvent in which at least some hydrogens in these solvents are substituted with halogen atoms such as fluorine. For the electrolyte salt, a lithium salt such as LiPF₆ is used, for example.

The non-aqueous electrolyte secondary battery 10 comprises: a positive electrode terminal 12 electrically connected to the positive electrode 20 with a positive electrode current collector, not illustrated, interposed therebetween; and a negative electrode terminal 13 electrically connected to the negative electrode 30 with a negative electrode current collector, not illustrated, interposed therebetween. In the present embodiment, the positive electrode terminal 12 is disposed on one end side in the longitudinal direction of the sealing plate 15, and the negative electrode terminal 13 is disposed on the other end side in the longitudinal direction of the sealing plate 15. The positive electrode terminal 12 and the negative electrode terminal 13 are external connection terminals to be electrically connected to another non-aqueous electrolyte secondary battery 10, a circuit, a device, and the like, and attached to the sealing plate 15 with an insulating member interposed therebetween.

On the sealing plate 15 constituting the exterior housing body, a liquid injecting part 16 is provided for injecting the non-aqueous electrolyte liquid inside the exterior housing can 14 housing the electrode assembly 11. As described below in detail, the non-aqueous electrolyte liquid is injected through the liquid injecting part 16 after the electrode assembly 11 is housed in the exterior housing can 14 to seal the opening of the exterior housing can 14 with the sealing plate 15. The liquid injecting part 16 is constituted with, for example, a through hole formed on the sealing plate 15 and a sealing member made with rubber sealing the through hole. Provided on the sealing plate 15 are a gas discharging vent 17 to open and discharge gas with abnormality in battery and a current-cutting mechanism 18 to cut off the current path with abnormality.

In the example illustrated in FIG. 1, the liquid injecting part 16 and the gas discharging vent 17 are provided between the positive electrode terminal 12 and the negative electrode terminal 13. The gas discharging vent 17 is disposed on a central part in the longitudinal direction of the sealing plate 15, and the liquid injecting part 16 is interposed between the positive electrode terminal 12 and the gas discharging vent 17. The current-cutting mechanism 18 is disposed on a back side of the positive electrode terminal 12.

As exemplified in FIG. 2, the electrode assembly 11 is divided into a first electrode group 11A and a second electrode group 11B. The first electrode group 11A and the second electrode group 11B have, for example, the same stacked structure and size, and stacked to be disposed in the thickness direction of the electrode assembly 11. Formed on the upper end part of each electrode group are a plurality of positive electrode tabs 23 and a plurality of negative electrode tabs 33 extending to the sealing plate 15 side. Each tab is a projection where no mixture layer, described below, is formed to expose a surface of the core. The positive electrode tab 23 is electrically connected to the positive electrode terminal 12 with the positive electrode current collector interposed therebetween, and the negative electrode tab 33 is electrically connected to the negative electrode terminal 13 with the negative electrode current collector interposed therebetween. The outer peripheral surface of each electrode group is covered with the separator 40.

FIG. 3 is an exploded perspective view of the electrode assembly 11. As exemplified in FIG. 3, the electrode assembly 11 includes the plurality of the positive electrodes 20 and the plurality of the negative electrodes 30. Each electrode group constituting the electrode assembly 11 includes, for example, one more negative electrodes 30 than the positive electrodes 20, and the negative electrodes 30 are disposed on both the sides in the thickness direction of each electrode group. FIG. 3 illustrates a plurality of the separators 40 interposed one by one between the positive electrodes 20 and the negative electrodes 30, but the number of the separator 40 included in each electrode group may be one. In this case, an elongate separators 40 is folded in zigzag to be interposed between the positive electrodes 20 and the negative electrodes 30.

As described above, the electrode assembly 11 has the structure in that the plurality of the positive electrodes 20 and the plurality of the negative electrodes 30 are alternately stacked one by one with the separator 40 interposed therebetween. The positive electrode 20 and the negative electrode 30 include the positive electrode tab 23 and negative electrode tab 33 protruding upward, respectively. In other words, the positive electrode 20 and the negative electrode 30 are stacked to be disposed so that each tab directs to the same direction. The positive electrode 20 and the negative electrode 30 are stacked to be disposed so that: the positive electrode tab 23 is positioned on one end side in the lateral direction of the electrode assembly 11, and the negative electrode tab 33 is positioned on the other end side in the lateral direction of the electrode assembly 11; and the plurality of the positive electrode tabs 23 is aligned in the thickness direction of the electrode assembly 11, and the plurality of the negative electrode tabs 33 is aligned in the thickness direction of the electrode assembly 11.

FIG. 4 is a sectional view illustrating a part of the electrode assembly 11 and a front view of the positive electrode 20. As exemplified in FIG. 4, the positive electrode 20 includes a positive electrode core 21 and a positive electrode mixture layer 22 formed on a surface of the positive electrode core 21. The positive electrode mixture layer 22 is formed on both surfaces of the positive electrode core 21. Similarly, the negative electrode 30 includes a negative electrode core 31 and a negative electrode mixture layer 32 formed on a surface of the negative electrode core 31. The negative electrode mixture layer 32 is formed on both surfaces of the negative electrode core 31. The negative electrode 30 has one size larger than the positive electrode 20, and the negative electrode mixture layer 32 is disposed opposite to a range in which the positive electrode mixture layer 22 of the positive electrode 20 is formed.

Hereinafter, the positive electrode 20 and the negative electrode 30, particularly constitutions of the positive electrode mixture layer 22 and negative electrode mixture layer 32, will be described in detail.

### [Positive Electrode]

The positive electrode 20 has a structure in that the positive electrode mixture layer 22 is formed on an entire region of the surface of the positive electrode core 21 excluding the positive electrode tab 23 (hereinafter, referred to as "basic part"). For the positive electrode core 21, a foil of a metal stable within an operation voltage range of the battery, such as aluminum, a film in which such a metal is disposed on a surface layer thereof, and the like may be used. A thickness of the positive electrode core 21 is, for example, 5 µm to 20 µm, and preferably 8 µm to 15 µm. The basic part of the positive electrode core 21 has a rectangular shape viewed from the front side, and the positive electrode tab 23 protrudes from one side of the rectangle. Typically, processing one metal foil may yield the positive electrode core 21 in which the basic part and the positive electrode tab 23 are integrally formed.

The positive electrode mixture layer 22 includes, for example, a positive electrode active material, a conductive agent, and a binder, and formed on both surfaces of the basic part of the positive electrode core 21. The positive electrode mixture layer 22 may be formed on a root part of the positive electrode tab 23. A thickness of the positive electrode mixture layer 22 is, for example, 40 µm to 120 µm, and preferably 50 µm to 80 µm, on one side of the positive electrode core 21. The positive electrode 20 may be produced by applying a positive electrode mixture slurry including the positive electrode active material, the conductive agent, the binder, and the like on the positive electrode core 21, drying and compressing the applied film to form the positive electrode mixture layers 22 on both the surfaces of the positive electrode core 21 and then cut to a predetermined shape.

For the positive electrode active material, a lithium-transition metal composite oxide is used. Examples of metal elements contained in the lithium-transition metal composite oxide include Ni, Co, Mn, Al, B, Mg, Ti, V, Cr, Fe, Cu, Zn, Ga, Sr, Zr, Nb, In, Sn, Ta, and W. Among them, at least one of the group consisting of Ni, Co, and Mn is preferably contained. A preferable example of the composite oxide is a lithium-transition metal composite oxide containing Ni, Co, and Mn, or a lithium-transition metal composite oxide containing Ni, Co, and Al.

A median diameter on a volumetric basis (hereinafter, referred to as "D50") of the positive electrode active material is, for example, 2 µm to 30 µm. The D50 on a volumetric basis, also referred to as a median diameter, means a particle diameter at which a cumulative frequency is 50% from a smaller particle diameter side in a particle size distribution on a volumetric basis. D50 may be measured by using a laser diffraction-type particle size distribution measuring device (for example, MICROTRAC HRA, manufactured by NIKKISO CO., LTD.) with water as a dispersion medium.

Examples of the conductive agent included in the positive electrode mixture layer 22 may include a carbon material such as carbon black, acetylene black, Ketjenblack, and graphite. Examples of the binder included in the positive electrode mixture layer 22 may include a fluororesin such as polytetrafluoroethylene (PTFE) and polyvinylidene fluoride (PVdF), polyacrylonitrile (PAN), a polyimide resin, an acrylic resin, and a polyolefin resin. With these resins, a cellulose derivative such as carboxymethyl cellulose (CMC) or a salt thereof, polyethylene oxide (PEO), and the like may be used in combination.

On the positive electrode core 21 of the positive electrode 20, a protecting layer, not illustrated, may be provided adjacent to the positive electrode mixture layer. The protecting layer extends in a band shape along the longitudinal direction of the positive electrode core 21. The protecting layer has a function of preventing a short circuit between the negative electrode 30 and the positive electrode core 21 when the positive electrode 20 is disposed opposite to the negative electrode 30 with the separator 40 interposed therebetween to constitute the electrode assembly. The protecting layer includes, for example, particles of inorganic materials such as ceramics, a resin binder, and the like. A thickness of the protecting layer formed on both the surfaces of the positive electrode core 21 is, for example, 70 µm. In the present embodiment, the positive electrode core 21 of the positive electrode 20 includes the positive electrode core 21 on which the protecting layer is formed. In the present embodiment, the protecting layer is not an essential component, and may be omitted.

The positive electrode mixture layer 22 may have an ununiform density, and may have a high-density region and a low-density region. Specifically, a density of a first region distanced from the liquid injecting part 16 is lower than a density of a second region proximate to the liquid injecting part 16. That is, on the positive electrode mixture layer 22, the low-density region is formed on a part distanced from the liquid injecting part 16, and the high-density region is formed on a part proximate to the liquid injecting part 16. When the positive electrode mixture layer has a uniform density, the non-aqueous electrolyte liquid is difficult to infiltrate the first region distanced from the liquid injecting part 16, but setting the density of the first region to be lower facilitates the permeation of the non-aqueous electrolyte liquid in the first region.

In the present embodiment, the liquid injecting part 16 is provided between the positive electrode terminal 12 and the gas discharging vent 17 of the sealing plate 15 and at a position stacked with the positive electrode tab 23 in the upper-lower direction. Thus, the positive electrode mixture layer 22 may have the highest density in a proximity of the positive electrode tab 23 and may have a lower density as distancing from the positive electrode tab 23. From the viewpoint of productivity of the positive electrode 20, the positive electrode mixture layer 22 preferably has a substantially constant density along the lateral direction. That is, the density of the positive electrode mixture layer 22 preferably changes in the upper-lower direction, and the upper end side of the positive electrode mixture layer 22, which is near the liquid injecting part 16, preferably has a higher density, and the lower end side of the positive electrode mixture layer 22, which is distanced from the liquid injecting part 16, preferably has a lower density.

When the positive electrode mixture layer 22 is trisected from the sealing plate 15 side to the bottom side of the exterior housing can 14 (the positive electrode mixture layer 22 formed on the basic part of the positive electrode core 21 is trisected in the upper-lower direction) to define regions as a second region 22B, an intermediate region 22C, and a first region 22A from the sealing plate 15 side in this order, densities of the positive electrode mixture layer 22 preferably satisfy the following relationship:

The density of the second region 22B ρ_{22B} > the density of the intermediate region 22C ρ_{22C} > the density of the first region 22A ρ_{22A}.

The density ρ_{22A} is lower than the density ρ_{22C}, and the density ρ_{22C} is lower than the density ρ_{22B}. With such a density pattern formed on the positive electrode mixture layer 22, the non-aqueous electrolyte liquid may uniformly spread in the entirety of the electrode assembly 11 when the non-aqueous electrolyte liquid is injected through the liquid injecting part 16 provided on the sealing plate 15.

The density of the positive electrode mixture layer 22 may be calculated as follows: a mass in which a mass of the positive electrode core 21 is subtracted from a mass of the positive electrode 20 having a predetermined area is defined as a mass of the positive electrode mixture layer 22; and the calculation is performed with the predetermined area, the mass of the positive electrode mixture layer 22, and an average thickness of the positive electrode mixture layer 22 (the same applies to a density of the negative electrode mixture layer 32). When each of the densities ρ_{22B}, ρ_{22C}, and ρ_{22A} are measured, the positive electrode mixture layer 22 formed on the basic part of the positive electrode core 21 may be trisected in the upper-lower direction to be used as sample specimens for the density measurement.

The density of the positive electrode mixture layer 22 may decrease stepwise from the upper end to lower end of the positive electrode mixture layer 22, and for example, may steeply change with boundaries of the second region 22B, the intermediate region 22C, and the first region 22A. In this case, each region may have a constant density in an entirety of each region. With the density of the positive electrode mixture layer 22, the thickness of the positive electrode mixture layer 22 may change stepwise. For example, the thickness may increase stepwise from the upper end to lower end of the positive electrode mixture layer 22 within a range having no influence on battery performances.

The density of the positive electrode mixture layer 22 may change stepwise as above, but preferably decreases gradually from the upper end to lower end of the positive electrode mixture layer 22. That is, there is preferably no boundary with steep change in the density of the positive electrode mixture layer 22. For example, there is no steep change in the density with the boundaries of the second region 22B, the intermediate region 22C, and the first region 22A, and the density of each region gradually decreases from the upper end to lower end of each region. Forming a gentle change in the density in the upper-lower direction of the positive electrode mixture layer 22 enables the electrolyte liquid to move more smoothly. The thickness may gradually increase from the upper end to lower end of the positive electrode mixture layer 22 within a range having no influence on battery performances.

The above density pattern of the positive electrode mixture layer 22 may be applied to only the positive electrode mixture layer 22 formed on one surface of the positive electrode core 21, but preferably applied to each positive electrode mixture layer 22 formed on both the surfaces of the positive electrode core 21 from the viewpoints of uniformizing the battery reaction, and the like. Both the positive electrode mixture layers 22 preferably have the same density pattern. The above density pattern of the positive electrode mixture layer 22 is preferably applied to all the positive electrodes 20 constituting the electrode assembly 11.

### [Negative Electrode]

The negative electrode 30 has a structure in that the negative electrode mixture layer 32 is formed on an entire region of a basic part, which is a part of the surface of the negative electrode core 31 excluding the negative electrode tab 33. For the negative electrode core 31, a foil of a metal stable within an operation voltage range of the battery, such as copper, a film in which such a metal is disposed on a surface layer thereof, and the like may be used. A thickness of the negative electrode core 31 is, for example, 3 µm to 15 µm, and preferably 5 µm to 10 µm. Similarly to the positive electrode 20, the basic part of the negative electrode core 31 has a rectangular shape viewed from the front side, and the negative electrode tab 33 protrudes from one side of the rectangle.

The negative electrode mixture layer 32 includes, for example, a negative electrode active material and a binder, and formed on both surfaces of the basic part of the negative electrode core 31. The negative electrode mixture layer 32 may be formed on a root part of the negative electrode tab 33. A thickness of the negative electrode mixture layer 32 is, for example, 40 µm to 120 µm, and preferably 50 µm to 80 µm, on one side of the negative electrode core 31. The negative electrode 30 may be produced by applying a negative electrode mixture slurry including the negative electrode active material, the binder, and the like on the surface of the negative electrode core 31, drying and compressing the applied film to form the negative electrode mixture layers 32 on both the surfaces of the negative electrode core 31 and then cut to a predetermined shape.

For the negative electrode active material, a carbon-based active material that reversibly occludes and releases lithium ions is used, for example. The carbon-based active material is preferably a graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material composed of at least one of Si and a Si-containing compound may also be used, and the carbon-based active material and the Si-based active material may be used in combination.

For the binder included in the negative electrode mixture layer 32, a fluororesin, PAN, a polyimide, an acrylic resin, a polyolefin, and the like may be used similar to that in the positive electrode 20, but styrene-butadiene rubber (SBR) is preferably used. The negative electrode mixture layer 32 preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination.

Similarly to the positive electrode mixture layer 22, the negative electrode mixture layer 32 may have a high-density region and a low-density region. When the negative electrode mixture layer 32 formed on the basic part of the negative electrode core 31 is trisected in the upper-lower direction to define regions as a second region, an intermediate region, and a first region from the sealing plate 15 side in this order, densities of the negative electrode mixture layer 32 preferably satisfy the following relationship:

The density of the second region 32B ρ_{32B} > the density of the intermediate region 32C ρ_{32C} > the density of the first region 32A ρ_{32A}.

The density of the negative electrode mixture layer 32 may change stepwise, but preferably decreases gradually from the upper end to lower end of the negative electrode mixture layer 32.

Since the density pattern of the positive electrode mixture layer 22 may be applied to the negative electrode mixture layer 32 (a preferable value of the density is different, as above), the above description is incorporated for the negative electrode mixture layer 32 and the overlapped description is omitted below. To improve the permeation properties of the non-aqueous electrolyte liquid in the electrode assembly 11, the density of the first region distanced from the liquid injecting part 16 is set to be lower than the density of a second region proximate to the liquid injecting part 16 in at least one of the positive electrode mixture layer 22 and the negative electrode mixture layer 32. Thus, the above density pattern may be applied to only the positive electrode mixture layer 22, and may be applied to only the negative electrode mixture layer 32. The above density pattern may be applied to both of the positive electrode mixture layer 22 and the negative electrode mixture layer 32.

Hereinafter, an example of a method of manufacturing the non-aqueous electrolyte secondary battery 10 comprising the above constitution will be described. The manufacturing step of the non-aqueous electrolyte secondary battery 10 includes: a step of producing the positive electrode 20; a step of producing the negative electrode 30; a step of producing the electrode assembly 11 by using the positive electrode 20 and the negative electrode 30; and a step of injecting the non-aqueous electrolyte liquid inside the exterior housing body after the electrode assembly 11 is housed inside the exterior housing body. For constituent materials of the electrode assembly 11 such as the positive electrode active material, the negative electrode active material, and the separator 40, materials similar to conventional ones may be used.

In the present manufacturing step, the mixture layer is formed so that a density of a region positioned on a first end part side of the mixture layer is lower than a density of a region positioned on a second end part side opposite to the first end part in at least one of the steps of forming the positive electrode mixture layer 22 and the negative electrode mixture layer 32. In the step of injecting the non-aqueous electrolyte liquid, the non-aqueous electrolyte liquid is injected inside the exterior housing body through the second end part side of the mixture layer. That is, the non-aqueous electrolyte liquid is injected so that the non-aqueous electrolyte liquid moves from a side with a higher density to a side with a lower density of the mixture layer.

When the exterior housing body is a rectangular metal container constituted with the exterior housing can 14 and the sealing plate 15, although the liquid injecting part 16 is present after injecting the non-aqueous electrolyte liquid, the position of the liquid injecting part may not be clearly identified after injecting the non-aqueous electrolyte liquid. In any case, the non-aqueous electrolyte liquid is required to be injected so that the non-aqueous electrolyte liquid moves from a side with a higher density to a side with a lower density of the mixture layer.

As described above, the positive electrode 20 is produced by forming the positive electrode mixture layer 22 on the surface of the positive electrode core 21. Similarly, the negative electrode 30 is produced by forming the negative electrode mixture layer 32 on the surface of the negative electrode core 31. Then, the electrode assembly 11 is produced by alternately stacking the plurality of the positive electrodes 20 and the plurality of the negative electrodes 30 one by one with the separator 40 interposed therebetween. In this time, the positive electrodes 20 and the negative electrodes 30 are stacked to be the disposition exemplified in FIG. 3. For the separator 40, an insulating porous sheet folded in zigzag may be used.

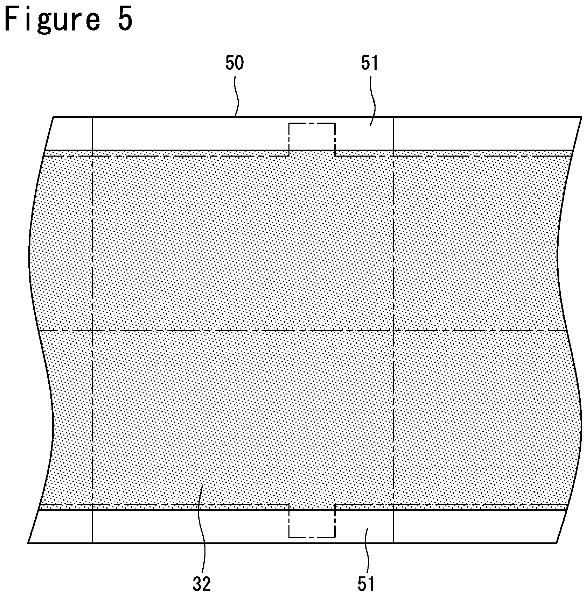

FIG. 5 is a view describing a manufacturing step of the positive electrode 20. As exemplified in FIG. 5, the positive electrode 20 is produced by applying the positive electrode mixture slurry including the positive electrode active material and the like on the elongate metal foil 50 to be the positive electrode core 21, drying and compressing the applied film to form the positive electrode mixture layers 22 on both the surfaces of the metal foil 50, and then cutting the metal foil 50 to a predetermined shape. The metal foil 50 may be cut with conventionally known methods such as, for example, laser irradiating and mold-punching. In FIG. 5, the cutting part is shown with virtual lines. The elongate metal foil 50 has, for example, a width that can form two positive electrodes 20 in the width direction and that is slightly wider than the length of two positive electrodes 20 in the upper-lower direction.

The positive electrode mixture slurry is applied on the metal foil 50 with excluding a region having a predetermined width from both the ends in the width direction, and an exposed part 51 where the surface of the metal foil 50 is exposed is provided on both the end parts in the width direction of the metal foil 50. The metal foil 50 in which the positive electrode mixture layer 22 is formed on both the surfaces by applying the positive electrode mixture slurry is cut along the longitudinal direction in the center in the width direction and cut along the width direction with predetermined intervals corresponding to a length in the lateral direction of the positive electrode 20. The metal foil 50 is further cut along a boundary between the positive electrode mixture layer 22 and the exposed part 51 in the longitudinal direction, and the exposed part 51 is cut with predetermined intervals to form the positive electrode tab 23.

The positive electrode mixture slurry is applied on the surface of the metal foil 50 by using a known applying apparatus such as, for example, a gravure coater, a slit coater, and a die coater. As above, a method of forming the positive electrode mixture layer 22 having the density pattern, the density of the second region 22B ρ_{22B} > the density of the intermediate region 22C ρ_{22C} > the density of the first region 22A ρ_{22A}, is not particularly limited. As an example, changing the coating mass of the positive electrode mixture slurry along the width direction of the metal foil 50 may form the above density pattern.

When the above density pattern is formed by changing the coating mass of the positive electrode mixture slurry, the slurry is applied so that, for example, the coating mass gradually increases from the exposed part 51 side to the central side in the width direction of the metal foil 50. In this time, if the slurry is applied so that the coating mass gradually increases from the central side to the exposed part 51 side in the width direction of the metal foil 50, the mixture slurry accumulates on the boundary between the exposed part 51 and the positive electrode mixture layer to raise the mixture layer, leading to generation of a so-called "raised end". The raised end is unpreferable because continuing production with winding a positive electrode sheet with such a raised end may generate creases on the raised end to break the sheet finally. The applied film of the positive electrode mixture slurry is then dried with heating to evaporate and remove a solvent in the slurry.

After the applied film is dried with heating and when the applied film is compressed by using a roller or the like, a rolling load of the roller is set to be higher from the central part to end parts in the width direction of the metal foil 50 on which the applied film is formed. For example, a method of compression with bending a roll in an inverted-crown shape by applying a high load on both ends in the width direction of the roller, a method of compression by using a roller having an inverted-crown shape, and the like may be used. By using the method, compressing the above metal foil 50 on which the slurry is applied so that the coating mass gradually increases from the exposed part 51 side to the central side in the width direction of the metal foil 50 forms the positive electrode mixture layer 22, on both the surfaces of the metal foil 50, in which the density gradually increases from the central part to the exposed part 51 side in the width direction of the metal foil 50.

Next, cutting the metal foil 50 on which the positive electrode mixture layer 22 is formed at a predetermined position may yield the positive electrode 20 comprising the positive electrode mixture layer 22 having the above density pattern on both the surfaces of the metal foil 50.

In the manufacturing step of the non-aqueous electrolyte secondary battery 10, the electrode assembly 11 is housed in the exterior housing can 14 so that the second region 22B being the high-density region is positioned on the upper end side of the positive electrode mixture layer 22, which is near the sealing plate 15, and the first region 22A being the low-density region is positioned on the lower side of the positive electrode mixture layer 22, which is near the bottom part of the exterior housing can 14. When the above density pattern is applied to the negative electrode mixture layer 32, the negative electrode 30 also disposed so that the second region being the high-density region is positioned on the sealing plate 15 side and the first region being the low-density region is positioned on the bottom side of the exterior housing can 14. In this time, the negative electrode 30 may be produced by applying the substantially same steps as the above positive electrode 20. The electrode assembly 11 is housed in the exterior housing can 14 after each positive electrode tab 23 of the plurality of the positive electrodes 20 is connected to the positive electrode current collector and each negative electrode tab 33 of the plurality of the negative electrodes 30 is connected to the negative electrode current collector by welding or the like.

The electrode assembly 11 is housed in the exterior housing can 14, the opening of the exterior housing can 14 is sealed with the sealing plate 15, and then the non-aqueous electrolyte liquid is injected through the liquid injecting part 16 provided on the sealing plate 15. This injection allows the non-aqueous electrolyte liquid to infiltrate the electrode assembly 11 from the upper end of the positive electrode mixture layer 22, permeate the second region 22B being the high-density region, and then rapidly infiltrate to the lower end side of the positive electrode mixture layer 22 in the order of the intermediate region 22C and the first region 22A, resulting in permeation in the entirety of the positive electrode mixture layer 22.

Hereinafter, description will be performed with reference to Examples of the present disclosure, but the present disclosure is not limited with these Examples. The density of the first region distanced from the liquid injecting part is any as long as it is lower than the density of the second region proximate to the liquid injecting part in at least one of the positive electrode mixture layer of the positive electrode and negative electrode mixture layer of the negative electrode constituting the electrode assembly.

First, in the positive electrode 20, Examples of a density of the second region 22B ρ_{22B}, a density of the intermediate region 22C ρ_{22C}, and a density of the first region 22A ρ_{22A} are as follows. The following values are an example of an average value of each density in a case where lithium nickel-cobalt-manganate (NCM) is used as the positive electrode active material, and a preferable range of each density varies depending on a type of the positive electrode active material and the like.

### (Example 1)

A positive electrode 20 was produced so that the density of the second region 22B ρ_{22B} was 3.72 g/cm³, the density of the intermediate region 22C ρ_{22C} was 3.62 g/cm³, and the density of the first region 22A ρ_{22A} was 3.52 g/cm³.

### (Example 2)

A positive electrode 20 was produced so that the density of the second region 22B ρ_{22B} was 3.67 g/cm³, the density of the intermediate region 22C ρ_{22C} was 3.57 g/cm³, and the density of the first region 22A ρ_{22A} was 3.47 g/cm³.

### (Example 3)

A positive electrode 20 was produced so that the density of the second region 22B ρ_{22B} was 3.62 g/cm³, the density of the intermediate region 22C ρ_{22C} was 3.52 g/cm³, and the density of the first region 22A ρ_{22A} was 3.42 g/cm³.

### (Example 4)

A positive electrode 20 was produced so that the density of the second region 22B ρ_{22B} was 3.59 g/cm³, the density of the intermediate region 22C ρ_{22C} was 3.57 g/cm³, and the density of the first region 22A ρ_{22A} was 3.55 g/cm³.

### (Example 5)

A positive electrode 20 was produced so that the density of the second region 22B ρ_{22B} was 3.57 g/cm³, the density of the intermediate region 22C ρ_{22C} was 3.47 g/cm³, and the density of the first region 22A ρ_{22A} was 3.37 g/cm³.

### (Example 6)

A positive electrode 20 was produced so that the density of the second region 22B ρ_{22B} was 3.52 g/cm³, the density of the intermediate region 22C ρ_{22C} was 3.42 g/cm³, and the density of the first region 22A ρ_{22A} was 3.32 g/cm³.

### (Example 7)

A positive electrode 20 was produced so that the density of the second region 22B ρ_{22B} was 3.44 g/cm³, the density of the intermediate region 22C ρ_{22C} was 3.34 g/cm³, and the density of the first region 22A ρ_{22A} was 3.23 g/cm³.

### (Example 8)

A positive electrode 20 was produced so that the density of the second region 22B ρ_{22B} was 3.37 g/cm³, the density of the intermediate region 22C ρ_{22C} was 3.27 g/cm³, and the density of the first region 22A ρ_{22A} was 3.16 g/cm³.

### (Example 9)

A positive electrode 20 was produced so that the density of the second region 22B ρ_{22B} was 3.30 g/cm³, the density of the intermediate region 22C ρ_{22C} was 3.20 g/cm³, and the density of the first region 22A ρ_{22A} was 3.08 g/cm³.

### (Example 10)

A positive electrode 20 was produced so that the density of the second region 22B ρ_{22B} was 3.23 g/cm³, the density of the intermediate region 22C ρ_{22C} was 3.13 g/cm³, and the density of the first region 22A ρ_{22A} was 3.01 g/cm³.

Next, in the negative electrode 30, Examples of a density of the second region 32B ρ_{32B}, a density of the intermediate region 32C ρ_{32C}, and a density of the first region 32A ρ_{32A} are as follows. The following values are an example of an average value of each density in a case where graphite is used as the negative electrode active material, and a preferable range of each density varies depending on a type of the negative electrode active material and the like.

### (Example 11)

A negative electrode 30 was produced so that the density of the second region 32B ρ_{32B} was 1.70 g/cm³, the density of the intermediate region 32C ρ_{32C} was 1.68 g/cm³, and the density of the first region 32A ρ_{32A} was 1.66 g/cm³.

### (Example 12)

A negative electrode 30 was produced so that the density of the second region 32B ρ_{32B} was 1.63 g/cm³, the density of the intermediate region 32C ρ_{32C} was 1.57 g/cm³, and the density of the first region 32A ρ_{32A} was 1.52 g/cm³.

### (Example 13)

A negative electrode 30 was produced so that the density of the second region 32B ρ_{32B} was 1.58 g/cm³, the density of the intermediate region 32C ρ_{32C} was 1.52 g/cm³, and the density of the first region 32A ρ_{32A} was 1.47 g/cm³.

### (Example 14)

A negative electrode 30 was produced so that the density of the second region 32B ρ_{32B} was 1.53 g/cm³, the density of the intermediate region 32C ρ_{32C} was 1.47 g/cm³, and the density of the first region 32A ρ_{32A} was 1.42 g/cm³.

### (Example 15)

A negative electrode 30 was produced so that the density of the second region 32B ρ_{32B} was 1.48 g/cm³, the density of the intermediate region 32C ρ_{32C} was 1.47 g/cm³, and the density of the first region 32A ρ_{32A} was 1.46 g/cm³.

### (Example 16)

A negative electrode 30 was produced so that the density of the second region 32B ρ_{32B} was 1.48 g/cm³, the density of the intermediate region 32C ρ_{32C} was 1.42 g/cm³, and the density of the first region 32A ρ_{32A} was 1.37 g/cm³.

### (Example 17)

A negative electrode 30 was produced so that the density of the second region 32B ρ_{32B} was 1.43 g/cm³, the density of the intermediate region 32C ρ_{32C} was 1.37 g/cm³, and the density of the first region 32A ρ_{32A} was 1.32 g/cm³.

### (Example 18)

A negative electrode 30 was produced so that the density of the second region 32B ρ_{32B} was 1.39 g/cm³, the density of the intermediate region 32C ρ_{32C} was 1.35 g/cm³, and the density of the first region 32A ρ_{32A} was 1.30 g/cm³.

### (Example 19)

A negative electrode 30 was produced so that the density of the second region 32B ρ_{32B} was 1.36 g/cm³, the density of the intermediate region 32C ρ_{32C} was 1.31 g/cm³, and the density of the first region 32A ρ_{32A} was 1.26 g/cm³.

### (Example 20)

A negative electrode 30 was produced so that the density of the second region 32B ρ_{32B} was 1.32 g/cm³, the density of the intermediate region 32C ρ_{32C} was 1.28 g/cm³, and the density of the first region 32A ρ_{32A} was 1.22 g/cm³.

### (Evaluation of Permeation Rate of Non-Aqueous Electrolyte Liquid)

On the positive electrodes 20 and negative electrodes 30 of Examples 1 to 20, permeation rates of the non-aqueous electrolyte liquid were measured. The measurement method was performed by dropping a specific amount (1 µml) of the non-aqueous electrolyte liquid on a positive electrode plate after compression and measuring a time for complete permeation as the permeation time with a stopwatch. These results are shown in Table 1 and Table 2.

**[Table 1]**

| | Second Region | | Intermediate Region | | First Region | |
|---|---|---|---|---|---|---|
| | Density ρ_{22B} (g/cm³) | Permeation Time (sec) | Density ρ_{22C} (g/cm³) | Permeation Time (sec) | Density ρ_{22A} (g/cm³) | Permeation Time (sec) |
| Example 1 | 3.72 | 604 | 3.62 | 364 | 3.52 | 230 |
| Example 2 | 3.67 | 467 | 3.57 | 287 | 3.47 | 186 |
| Example 3 | 3.62 | 364 | 3.52 | 230 | 3.42 | 152 |
| Example 4 | 3.59 | 340 | 3.57 | 287 | 3.55 | 300 |
| Example 5 | 3.57 | 287 | 3.47 | 186 | 3.37 | 126 |
| Example 6 | 3.52 | 230 | 3.42 | 152 | 3.32 | 104 |
| Example 7 | 3.44 | 157 | 3.34 | 117 | 3.23 | 70 |
| Example 8 | 3.37 | 123 | 3.27 | 90 | 3.16 | 61 |
| Example 9 | 3.30 | 100 | 3.20 | 65 | 3.08 | 50 |
| Example 10 | 3.23 | 70 | 3.13 | 55 | 3.01 | 45 |

**[Table 2]**

| | Second Region | | Intermediate Region | | First Region | |
|---|---|---|---|---|---|---|
| | Density ρ_{32B} (g/cm³) | Permeation Time (sec) | Density ρ_{32C} (g/cm³) | Permeation Time (sec) | Density ρ_{32A} (g/cm³) | Permeation Time (sec) |
| Example 11 | 1.70 | 163 | 1.68 | 143 | 1.66 | 126 |
| Example 12 | 1.63 | 101 | 1.57 | 72 | 1.52 | 53 |
| Example 13 | 1.58 | 73 | 1.52 | 53 | 1.47 | 42 |
| Example 14 | 1.53 | 54 | 1.47 | 42 | 1.42 | 33 |
| Example 15 | 1.48 | 44 | 1.47 | 41 | 1.46 | 39 |
| Example 16 | 1.48 | 42 | 1.42 | 33 | 1.37 | 25 |
| Example 17 | 1.43 | 34 | 1.37 | 25 | 1.32 | 21 |
| Example 18 | 1.39 | 28 | 1.35 | 23 | 1.30 | 18 |
| Example 19 | 1.36 | 24 | 1.31 | 19 | 1.26 | 13 |
| Example 20 | 1.32 | 21 | 1.28 | 15 | 1.22 | 11 |

From the results of Examples 1 to 20, it is found that the permeation time is shorter in a region with a lower density between regions with a lower density and a higher density of the positive electrode mixture layer and negative electrode mixture layer. That is, the non-aqueous electrolyte liquid injected through the liquid injecting part 16 provided on the sealing plate 15 may smoothly move to the can bottom part opposite to the liquid injecting part by forming the density pattern in that the densities ρ_{22A} and ρ_{32A} are lower than the densities ρ_{22C} and ρ_{32C}, and the densities ρ_{22C} and ρ_{32C} are lower than the densities ρ_{22B} and ρ_{32B}. In other words, the results mean that the above density pattern enables the non-aqueous electrolyte liquid to uniformly spread in the entirety of the electrode assembly.

As above, the non-aqueous electrolyte secondary battery 10 comprising the above constitution and comprising the electrode assembly 11 in which the plurality of the positive electrodes and the plurality of the negative electrodes are alternately stacked one by one with the separator interposed therebetween enables the non-aqueous electrolyte liquid to permeate in the entirety of the electrode assembly 11 and to uniformly spread in the entirety of the electrode assembly 11 when the non-aqueous electrolyte liquid is injected inside the exterior housing can 14. Although the non-aqueous electrolyte liquid is extruded outside the electrode assembly 11 by expansion of the electrode assembly 11 due to charge and discharge of the battery, the non-aqueous electrolyte liquid has better infiltration properties than that in a wound electrode assembly because the electrode assembly 11 has the structure in that the positive electrodes 20 and the negative electrodes 30 are alternately stacked one by one with the separator 40 interposed therebetween. That is, the non-aqueous electrolyte liquid infiltrates from upper, lower, left, and right sides of the electrode assembly 11. The non-aqueous electrolyte secondary battery 10 may remarkably improve the permeation properties of the non-aqueous electrolyte liquid in the electrode assembly 11 with a synergistic effect between the above density pattern of the mixture layer and the stacked structure of the electrode assembly 11, resulting in inhibition of performance deterioration caused by an uneven amount of the non-aqueous electrolyte liquid in the electrode assembly.

The above embodiments may be appropriately modified in a range without impairing the object of the present disclosure. FIG. 2, for example, exemplifies the electrode assembly 11 including the first electrode group 11A and the second electrode group 11B, but the electrode assembly 11 may not be divided into a plurality of electrode groups. In addition, anticipated is a constitution in that a mixture layer having the above density pattern is formed on only a part of the plurality of the positive electrodes 20 or only a part of the plurality of the negative electrodes 30.

### REFERENCE SIGNS LIST

10 Non-aqueous electrolyte secondary battery
11 Electrode assembly
11A First electrode group
11B Second electrode group
12 Positive electrode terminal
13 Negative electrode terminal
14 Exterior housing can
15 Sealing plate
16 Liquid injecting part
17 Gas discharging vent
18 Current-cutting mechanism
20 Positive electrode
21 Positive electrode core
22 Positive electrode mixture layer
22A First region
22B Second region
22C Intermediate region
23 Positive electrode tab
30 Negative electrode
31 Negative electrode core
32 Negative electrode mixture layer
33 Negative electrode tab
40 Separator
50 Metal foil
51 Exposed part

## Claims

1. A non-aqueous electrolyte secondary battery, comprising:
an electrode assembly in which a plurality of positive electrodes and a plurality of negative electrodes are alternately stacked one by one with a separator interposed therebetween;
a non-aqueous electrolyte liquid; and
an exterior housing body housing the electrode assembly and the non-aqueous electrolyte liquid, wherein
a liquid injecting part for injecting the non-aqueous electrolyte liquid is provided on the exterior housing body,
each of the plurality of the positive electrodes includes a positive electrode core and a positive electrode mixture layer formed on a surface of the positive electrode core,
each of the plurality of the negative electrodes includes a negative electrode core and a negative electrode mixture layer formed on a surface of the negative electrode core, and
in at least one of the positive electrode mixture layer and the negative electrode mixture layer, a density of a first region distanced from the liquid injecting part is lower than a density of a second region proximate to the liquid injecting part.

2. The non-aqueous electrolyte secondary battery according to claim 1, wherein
the exterior housing body includes a bottomed rectangular-cylindrical exterior housing can and a sealing plate sealing an opening of the exterior housing can,
the liquid injecting part is provided on the sealing plate, and
when at least one of the positive electrode mixture layer and the negative electrode mixture layer is trisected from a side of the sealing plate to a bottom side of the exterior housing can to define regions as the second region, an intermediate region, and the first region from the side of the sealing plate in this order, densities of each of the regions satisfy a relationship: the density of the second region > the density of the intermediate region > the density of the first region.

3. A method of manufacturing a non-aqueous electrolyte secondary battery comprising: an electrode assembly in which a plurality of positive electrodes and a plurality of negative electrodes are alternately stacked one by one with a separator interposed therebetween; a non-aqueous electrolyte liquid; and an exterior housing body, the method including:
a step of producing the positive electrode by forming a positive electrode mixture layer on a surface of a positive electrode core;
a step of producing the negative electrode by forming a negative electrode mixture layer on a surface of a negative electrode core;
a step of producing the electrode assembly by using a plurality of the positive electrodes and a plurality of the negative electrodes; and
a step of injecting the non-aqueous electrolyte liquid after the electrode assembly is housed inside the exterior housing body, wherein
in at least one of the steps of forming the positive electrode mixture layer and the negative electrode mixture layer, the mixture layer is formed so that a density of a region positioned on a first end part side of the mixture layer is lower than a density of a region positioned on a second end part side opposite to the first end part, and
in the step of injecting the non-aqueous electrolyte liquid, the non-aqueous electrolyte liquid is injected inside the exterior housing body through the second end part side.
